(19) **Europäisches Patentamt**

**European Patent Office**

**Office européen des brevets**

(11) **EP 0 729 629 B1**

(12) **EUROPEAN PATENT SPECIFICATION**

(45) Date of publication and mention
of the grant of the patent:
**05.11.2003 Bulletin 2003/45**

(51) Int Cl.⁷: **G11B 7/00**

(86) International application number:
**PCT/IB95/00648**

(21) Application number: **95927046.3**

(22) Date of filing: **16.08.1995**

(87) International publication number:
**WO 96/006427 (29.02.1996 Gazette 1996/10)**

(54) **MULTI-LAYER INFORMATION STORAGE SYSTEM**

MEHRSCHICHTINFORMATIONSSPEICHERSYSTEM

SYSTEME MULTICOUCHE DE STOCKAGE D'INFORMATION

(84) Designated Contracting States:
**AT BE DE FR GB IT SE**

(30) Priority: **23.08.1994 EP 94202416**
**01.09.1994 US 299861**

(43) Date of publication of application:
**04.09.1996 Bulletin 1996/36**

(73) Proprietors:
• **Koninklijke Philips Electronics N.V.**
**5621 BA Eindhoven (NL)**
Designated Contracting States:
**AT BE DE FR GB IT SE**
• **PHILIPS NORDEN AB**
**164 85 Stockholm (SE)**
Designated Contracting States:
**SE**

(72) Inventors:
• **COOPS, Peter**
**NL-5621 BA Eindhoven (NL)**
• **HEEMSKERK, Jacobus, Petrus, Josephus**
**NL-5621 BA Eindhoven (NL)**
• **VISSER, Derk**
**NL-5621 BA Eindhoven (NL)**
• **HOLTSLAG, Antonius, Hendricus, Maria**
**NL-5621 BA Eindhoven (NL)**

(74) Representative: **Visser, Derk et al**
**Philips**
**Intellectual Property & Standards**
**P.O. Box 220**
**5600 AE Eindhoven (NL)**

(56) References cited:
**EP-A- 0 496 132**      **EP-A- 0 517 491**
**EP-A- 0 605 924**      **US-A- 5 033 040**
**US-A- 5 155 717**

## Description

The invention relates to an information storage system comprising an optical record carrier having a stack of information layers alternating with spacer layers, and a device for scanning the information layers, which device is provided with a radiation source and focusing means for selectively focusing a radiation beam from the radiation source on the separate information layers and a focus servosystem. The invention also relates to a device for scanning information layers of an optical record carrier, and to an optical record carrier having a plurality of information layers.

A multi-layer record carrier comprises a stack of information layers separated from one another by spacer layers, in which each information layer may comprise information. The large information storage capacity of such a record carrier increases its convenience of use compared to single-layer record carriers and reduces the price of the medium per unit of information stored. Each information layer can be scanned independently of the other information layers by means of a radiation beam. Dependent on the type of record carrier, information can be written into an information layer during scanning and/or information already written can be read or erased. The information layers in a stack can be scanned by means of a radiation beam which is incident from one side on the record carrier. For scanning the separate information layers, the height, or axial position, of the scanning spot formed by the radiation beam is varied. The information contents of the record carrier may be further increased by implementing the record carrier as a two-sided record carrier. Then a stack of information layers is present at both sides of the record carrier, and each stack can be scanned from a different side of the record carrier. A stack of information layers may be provided on a substrate which should be transparent if the stack is scanned through the substrate.

It is recommendable to maximize the number of information layers in order to render the information contents of a record carrier as large as possible, thereby reducing the cost per unit of information. However, the number of information layers fitting in a stack is limited by the maximum thickness of the stack on the one hand and by the required minimal mutual distance of the information layers on the other hand. The minimum mutual distance is determined by crosstalk of the information layers, i.e. the quality of signals generated from radiation coming from a layer to be scanned is detrimentally influenced by radiation coming from other information layers. European Patent Application no. 0 605 924 discloses an information storage system in which the minimum distance between information layers is determined by the requirement of an acceptable crosstalk between information signals representing the information stored in the information layers. However, some systems of this type have as a drawback that the tracking of the information layers by the scanning spot has turned out to be difficult.

It is, inter alia an object of the invention to provide an information storage system which can scan the information layers properly and at the same time has a relatively low price.
According to a first aspect of the invention, this object is achieved by an information storage system as described in the opening paragraph and is characterized in that the thickness of each spacer layer is at least 1.5 times the refractive index of the spacer layer multiplied by the peak-to-peak distance of the so-called S-curve of the focus servosystem.

The invention is based on the recognition that the extent of the influence of crosstalk depends on the type of signal derived from the radiation coming from the information layer. Notably, crosstalk between servo errorsignals may give rise to stringent requirements for the minimum distance. In a focus servosystem, with which the device keeps the scanning spot on the information layer to be scanned, the shape of the S-curve, i.e. the response curve of the focus servosystem as a function of the distance between the scanning spot and the information layer, is influenced by a neighbouring information layer. This curve generally has a positive and a negative extreme, while the zero crossing in between is the point towards which the servosystem controls the position. In accordance with the invention, the thickness of each spacer layer in the stack must be at least 1.5 times the refractive index n of the spacer layer multiplied by the peak-to-peak distance of the S-curve of the focus servosystem. A thickness below said minimum value gives rise to a large crosstalk. The minimum thickness of a spacer layer is approximately 18 n $\mu$m for a focus servosystem with a peak-to-peak distance of 12 $\mu$m. A special focus servosystem designed for scanning multi-layer record carriers has a peak-to-peak distance of 8 $\mu$m, so that the minimum thickness of the spacer layer is 12 n $\mu$m. The minimum thickness of the spacer layer provides a record carrier with a high information density, or a low cost per unit of information, and information layers that can properly be scanned.

In a preferred embodiment of the system, the thickness of the spacer layer is smaller than 4 times the refractive index of the spacer layer multiplied by the peak-to-peak distance of the S-curve of the focus servosystem. A greater thickness gives an unnecessary decrease of information density of the record carrier. The thickness is preferably equal to approximately twice the refractive index of the spacer layer multiplied by the peak-to-peak distance.

A second aspect of the invention relates to the maximum thickness of the stack of information layers. European Patent Application no. 0 517 491 discloses an information storage system comprising a device for reading information layers in a multi-layer record carrier. The device is provided with an adjustable spherical aberration compensator for compensating the spherical aberration incurred by the radiation beam of the device when it passes through the material of the record carrier. Since the information layers are located at different heights in the record carrier, the device employs a specific setting of the compensator for each information layer. A drawback of this known information storage system is that there should be a separate compensation for each information layer. A compensator which can realise this is complicated and relatively expensive. The relatively low cost of the record carrier per unit of information is thus counteracted by a relatively expensive scanning device.

According to the second aspect of the invention, the information storage system is characterized in that the focusing means introduce such a fixed, stack-associated spherical aberration in the radiation beam that this aberration compensates the spherical aberration incurred by the radiation beam when it is focused at approximately half the height of the stack of information layers.

The second aspect is based on the recognition that a stack of information layers can be scanned by a satisfactorily corrected scanning spot, while using a single, constant and suitably chosen spherical aberration compensation. Since the spherical aberration is not compensated anymore for each information layer individually as in the known system, the focusing means can be made simpler, reducing the cost of the scanning device. The spherical aberration incurred by a focused radiation beam as a function of the thickness of the material through which the beam passes appears to be sufficiently small for a reasonably large range of thicknesses, which range is located symmetrically around the thickness for which the radiation beam is well compensated. By compensating the radiation beam in such a way that the scanning spot is substantially free from spherical aberration at approximately half the height of the stack, it is possible to scan information layers located within said range at both sides of this half height with a sufficiently low spherical aberration. This provides the possibility of scanning a stack of information layers by means of a scanning beam which is compensated once for spherical aberration. A device suitable for scanning a record carrier having a single stack then only needs a single, fixed spherical aberration compensation. Since this compensation can be built into a component which is already present in the device, for example an objective lens of the focusing means, the construction of the device can be simplified considerably. The considerably simpler spherical aberration compensation according to the invention reduces the cost of the scanning device. Although the features of the second aspect of the invention can be advantageously implemented in an information storage system with the specific minimum information layer distance according to the first aspect of the invention, the application is not limited thereto.

Since the spherical aberration due to the traversed material thickness of the record carrier is dependent on the refractive index of the material and on the numerical aperture of the radiation beam, the size of the above-mentioned range of sufficiently small spherical aberration will also depend on these parameters. Since the height of the outermost information layers should be within this range for a correct scanning, the maximum thickness of the stack is preferably a function of the refractive index of the material of the stack and of the numerical aperture of the focusing means.

The size of the range of sufficiently small spherical aberration within which information layers can still be scanned with a sufficient quality is determined by the admissible deterioration of the quality of the scanning spot, as determined by the scanning device. The deterioration leads to a less satisfactory detection of electric signals derived from the radiation coming from the record carrier. The deterioration which is maximally admissible for a specific information storage system may be expressed in terms of the Streh1 intensity of the scanning spot. The Streh1 intensity is the normalized maximum intensity of the radiation distribution of the scanning spot. If there are no aberrations, the Streh1 intensity is 1, and for large aberrations the Streh1 intensity goes towards 0. If the maximally admissible decrease of the Streh1 intensity due to spherical aberration is given by r, the size of the range depends on r and the maximum thickness of the stack preferably depends also on r.

The thickness of the stack is preferably smaller than the value 2d defined by the equation

$$2d = \frac{34\ n^3 \lambda \sqrt{r}}{(n^2-1)(NA)^4}$$

in which n is the refractive index of the spacer layers, $\lambda$ is the vacuum wavelength of the radiation beam and NA is the numerical aperture of the focusing means. If the information layers have such a thickness that the beam is also noticeably influenced by the refractive index of the information layers, the parameter n should be a weighted average of the refractive indices of the spacer layers and the information layers instead of the refractive index of the spacer layers. If the refractive indices of the spacer layers and/or those of the information layers are different, the parameter n should be a weighted average of these different refractive indices.

If the information layers are scanned through a transparent substrate, the spherical aberration caused in this substrate should also be compensated for in the focusing means. Generally, the substrate has small thickness variations within a certain thickness tolerance of the substrate. If the spherical aberration due to a substrate having a nominal thickness is compensated for, the thickness variations give rise to uncompensated spherical aberration in the radiation beam. This extra spherical aberration takes up a part of the above-mentioned maximally admissible spherical aberration of the information storage system, so that the admissible spherical aberration incurred in the stack is reduced. An information storage system according to the invention in which scanning through a substrate is realised and in which the extra spherical aberration is taken into account is characterized in that the thickness of the stack is smaller than 2d minus the thickness tolerance of the substrate.

The invention also relates to a device for scanning information layers of an optical record carrier, which device is provided with a radiation source, focusing means for selectively focusing a radiation beam from the radiation source to a scanning spot on separate information layers, and a servosystem for controlling the position of the scanning spot, comprising a detection system having a radiation-sensitive surface. Currently unscanned information layers yield a relatively large defocused, parasitic radiation spot on the radiation-sensitive surface, causing crosstalk. The servosystem for controlling the axial position of the scanning spot, i.e. the focus servosystem, will be affected by the crosstalk. To minimize the crosstalk on the focus errorsignal, the radiation-sensitive surface of the focus detection system should be small. According to the invention, the device is therefore characterized in that the radiation-sensitive surface has a largest dimension smaller than 3 times the diameter of the radiation spot formed on the radiation-sensitive surface by radiation from the record carrier when the radiation beam is optimally focused on the information layer to be scanned. However, the radiation-sensitive surface should have a certain minimum dimension to enable it to generate a satisfactory focus errorsignal. Therefore, the minimum dimension is preferably larger than 1.5 times the diameter of said spot. The above-mentioned 8 μm peak-to-peak distance of the S-curve can be realised with such a focus detection system. The maximum dimension of the radiation-sensitive surface is preferably approximately equal to twice the diameter of said radiation spot. It is possible to use a detection system with a relatively large radiation-sensitive surface while meeting the above dimensional requirement by arranging a diaphragm in the radiation beam, restricting the extent of the radiation incident on the radiation-sensitive surface. The resulting reduction of the crosstalk between the focus errorsignals makes it possible to reduce the minimum distance between the information layers.

Generally, a device for scanning record carriers is provided with a tracking servosystem for causing the scanning spot of the radiation beam to scan information layer tracks in which the stored information is arranged. Such a servosystem will also be influenced by crosstalk due to currently unscanned information layers situated proximate to the scanning spot. To minimize this influence, the radiation-sensitive surface of the tracking detection system preferably has a largest dimension smaller than 3 times the diameter of the radiation spot on the tracking detection system when the radiation beam is optimally focused on one of the information layers. The minimum dimension is preferably larger than the diameter of said spot for proper detection. This minimum value is lower than the above-mentioned minimum value for the focus detection system, because the tracking servosystem need only operate when the scanning spot is focused on the information layer, thereby producing a relatively small spot on the detection system, whereas the focus servosystem must operate also when the scanning spot is not properly focused on the information layer, thereby producing a spot larger than the in-focus spot. Such a device is particularly suitable for integration in a storage system according to the first and second aspect of the invention.

Some types of the scanning device are provided with dividing means located in the optical path between the radiation source and the focusing means for generating two servobeams and one main beam from the radiation beam, the two servobeams being used for generating a tracking errorsignal. According to the invention, crosstalk of tracking errorsignals can be reduced in such a device by choosing the power in the main beam to be smaller than six times, and preferably four times, the power in each of the servobeams. The crosstalk appears to be caused by parasitic radiation of the main beam reflected by an information layer which is not to be scanned currently and is incident on the servodetection system. In the device according to the invention the amount of radiation in the servobeams is larger than the amount of parasitic radiation of the main beam at the location of the radiation-sensitive detectors of the tracking detection system. This reduces the influence of the parasitic radiation and thus the crosstalk, thereby allowing a smaller spacer thickness.

The invention further relates to an optical record carrier having a plurality of information layers at different heights in the record carrier, which information layers are separated by spacer layers, which record carrier is suitable to be read by means of a focused radiation beam employing a fixed spherical aberration compensation. According to the invention, the record carrier is characterized in that the distance 2d between the highest and lowest information layer is smaller than

$$2d = \frac{34\, n^3 \lambda \sqrt{r}}{(n^2 - 1)(NA)^4}$$

in which n is the refractive index of the spacer layers, $\lambda$ is the vacuum wavelength of the focused radiation beam, NA is the numerical aperture of the focused radiation beam and r is 0.05. The numerical aperture of a beam is equal to the sine of the half apex angle of the beam in vacuo. Such a record carrier can be scanned by a relatively cheap scanning device, thereby reducing the cost of the information storage system.

A system in which stringent requirements are imposed on the quality of the scanning spot requires a record carrier in which the height of the stack is smaller than has been indicated in the previous paragraph. According to the invention, such a record carrier is characterized in that the value of r is 0.01.

The invention will now be described in greater detail by way of example with reference to the accompanying drawings in which

> Figure 1 shows an optical information storage system according to the invention, comprising a record carrier and a scanning device;
> Figure 2 shows the three detection systems of the device;
> Figure 3 shows the position of three spots on an information layer;
> Figure 4 shows the focus errorsignal as a function of the axial displacement of the scanning spot and Figure 5 shows a record carrier scanned through a substrate. Identical reference numerals in the various Figures refer to the same components.

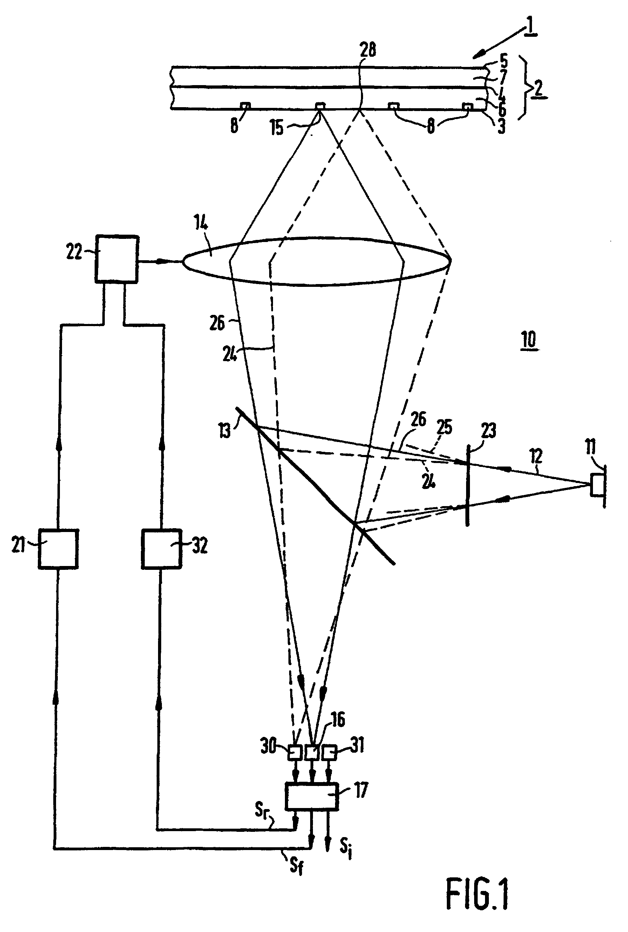

Figure 1 shows an optical information storage system according to the invention. The system comprises a multi-layer optical record carrier 1 having a stack 2 of three information layers 3, 4 and 5, separated by transparent spacer layers 6 and 7. Each information layer reflects at least part of radiation incident on it, whereas layers 3 and 4 transmit at least part of the radiation incident on them. Each information layer has parallel tracks 8 which are perpendicular to the plane of the drawing, and indicated only for information layer 3. Information can be stored as optically readable areas (not shown in the Figure) between or in the tracks 8. The readable areas may comprise pits or bumps in the information layer and areas with a reflectivity or a direction of magnetization different from their surroundings. The system further comprises a device 10 for scanning the information layers. The device comprises a radiation source 11, for example, a diode laser, generating a radiation beam 12. A beam splitter 13, for example a partially transparent mirror, sends the beam towards focusing means 14, for instance an objective lens, which focuses the beam to a scanning spot 15 on one of the information layers 3, 4 or 5. Part of the radiation reflected by the information layer is transmitted to a detection system 16 via objective lens 14 and beam splitter 13. When record carrier 1 is moved with respect to scanning spot 15, in the plane of the information layers, the scanning spot will scan a track on one of the information layers. The radiation beam reflected by the information layer will be modulated by information stored in the information layer, which modulation can be detected by detection system 16. The detection system and an electronic processing circuit 17 convert the modulation in an electric information signal $S_i$, representing the information read from the record carrier. Scanning spot IS may be positioned on a different information layer by changing the position of the spot along the optical axis of objective lens 14, for instance by changing the axial position of the objective lens or by changing the position of all the optical components of the device, i.e the radiation source, beam splitter, objective lens and detection system.

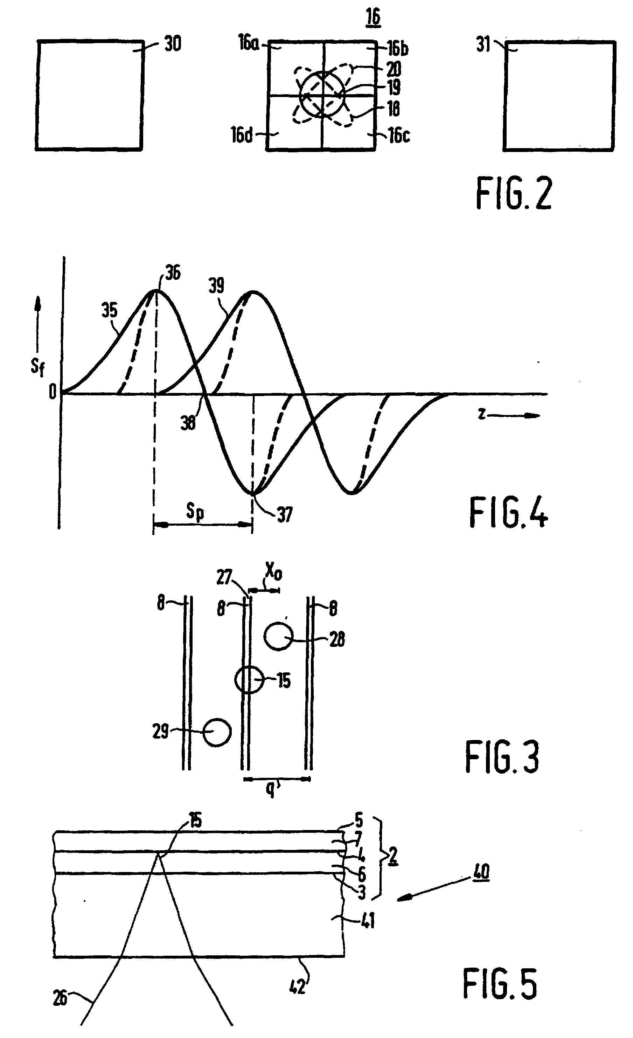

Device 10 is provided with a focus servosystem in order to keep scanning spot 15 properly focused on an information layer during movement of the layer with respect to the spot. A focus errorsignal $S_f$, i.e. a signal representing the axial distance between the scanning spot and an information layer, may be obtained by the so-called astigmatic method, known from United States Patent no. 4,023,033. To this end a radiation-sensitive surface of detection system 16 is divided into four quadrants 16a, 16b, 16c and 16d, as shown in Figure 2, each quadrant being connected to processing circuit 17. Information signal $S_i$ may be derived from the four quadrants by summing the signals of the quadrants. For a proper detection of the focus error, device 10 introduces astigmatism in the radiation incident on detection system 16, for instance by means of beam splitter 13. As a consequence, the shape of the radiation spot on detection system 16 changes as function of the focus error between shapes 18, 19 and 20 as indicated in Figure 2 for a scanning spot below the information layer, in focus on the information layer and above the information layer, respectively. Focus errorsignal $S_f$ may be derived by summing the signals from opposite quadrants to two sum signals and forming a difference signal of the two sum signals. Focus errorsignal $S_f$ is used as input for a focus servo circuit 21 which comprising servo electronics. The output of circuit 21 is used to control a linear motor 22 which can change the axial position of objective lens 14, thereby influencing the focus error.

Device 10 is also provided with a radial servosystem in order to keep scanning spot 15 on a track of an information layer. A radial errorsignal $S_r$, i.e. a signal representing the distance between the centre of scanning spot 15 and the centre line of a track 8 to be scanned, may be obtained by the so-called two-beam method, known from, for example, United States Patent no. 3,876,842. To this end device 10 is provided with dividing means, for instance a grating 23, positioned in radiation beam 12. The grating splits beam 12 into a +1st, -1st and 0th-order beam, *i.e.* a first tracking beam 24, a second tracking beam 25 and a main beam 26. For the sake of clarity only the full paths of the first tracking beam and of the main beam are shown. The two tracking beams and the main beam are focused into three spots on the information layer to be scanned by the objective system 14, i.e. information layer 3 for the situation given in Figure 1. The shift in Figure 1 between the position of first tracking beam 24 and main beam 26 at the location of objective lens 14 has been exaggerated for the sake of clarity. Figure 3 shows the positions of the three spots formed on information layer 3 for the case where there are no radial tracking errors. The track pitch or track period is equal to q. Track 27 is the track which the scanning spot must follow at the moment. The first and second tracking beams form tracking spot 28 and tracking spot 29, respectively. Scanning spot 15 formed by the main beam 26 is located on track 27. If there is no tracking error, as in Figure 2, the distance between a tracking spot and the centre line of the track 27 is equal to $x_0$. The value of $x_0$ depends on the way in which a radial tracking errorsignal is derived from the radiation in the tracking beams. Common values are q/4, q/2 and 3q/4. As is shown in Figure 1, the radiation of the two tracking beams 24 and 25 reflected by the information layer is transmitted to detection systems 30 and 31, respectively, *via* objective lens 14 and beam splitter 13. Detection systems 30 and 31 are connected to processing circuit 17, which derives radial errorsignal $S_r$ by subtracting the two signals from detection systems 30 and 31. Radial errorsignal $S_r$ is used as input for a radial servo circuit 32 which comprising servo electronics. The output of circuit 32 is used to control linear motor 22 which can also change the transverse position of objective lens 14, thereby influencing the radial error.

In general, the presence of information layers close to the information layer on which the main beam 26 is focused will affect focus errorsignal $S_f$ in the form of crosstalk, as will be explained with reference to Figure 4. This figure shows focus errorsignal $S_f$ as a function of the axial displacement z of scanning spot 15. Curve 35 is the so-called S-curve due to information layer 3. It shows two extrema 36 and 37 and a zero-crossing 38 between the extrema. When the scanning spot is at the axial position indicated by zero-crossing 38, the scanning spot is in the plane of information layer 3. During scanning of this layer, the focus servosystem, comprising detection system 16, processing circuit 17, focus servo circuit 21 and the linear motor 22, will try to keep the scanning spot at zero-crossing 38. At the same time, neighbouring information layer 4 also generates a focus errorsignal with an S-curve 39, causing crosstalk on S-curve 35. The total focus errorsignal is the sum of the S-curves of the various information layers. S-curve 39 causes an offset at zero-crossing 38 of S-curve 35, resulting in a zero-crossing of the total focus errorsignal at a z-position different from the position of zero-crossing 38. Scanning spot 15 will then not be located at information layer 3, but at a position intermediate between information layers 3 and 4. The offset can be avoided by increasing the spacing between information layers 3 and 4, i.e. by increasing the distance between S-curves 35 and 39. The proximity of the S-curves also causes asymmetry in the shape of the curves, which might result in capturing problems of the focus servosystem. The spacing between the S-curves must preferably be taken as at least 4 times the peak-to-peak distance $S_p$ of an S-curve to avoid said offset and asymmetry. The related minimum distance between the information layers is 4 $n$ $S_p$, with n the refractive index of spacer layer 6 between the two information layers. The maximum distance is preferably 8 $n$ $S_p$ in order to a high information density of the record carrier.

In an embodiment of the device according to the invention the minimum distance between the information layers may be reduced by reducing the crosstalk of the focus errorsignals. The crosstalk is due to radiation from currently unscanned information planes and incident on detection system 16, as has been explained in the previous paragraph. Since the currently unscanned information planes do not lie in the plane of the scanning spot 15, the radiation from these planes will not be in focus on detection system 16, and therefore form a relatively large radiation spot on the radiation-sensitive surface of the detection system. The radiation-sensitive surface of detection system 16 is bounded by the outer rectangle of element 16 in Figure 2. In an embodiment of the device according to the invention the size of the radiation-sensitive surface is made smaller than in conventional devices. The largest dimension of the radiation-sensitive surface is preferably smaller than 3 times the diameter of the radiation spot formed on the surface when the radiation beam is optimally focused on the information layer. Then the influence of radiation from unscanned information layers is relatively small, and, consequently, also the crosstalk. The largest dimension of the radiation-sensitive surface is preferably larger than 1.5 times said diameter of the radiation spot, because smaller dimensions will cause part of the radiation in shapes 18 and 20 in Figure 2 to fall outside the radiation-sensitive surface, thereby reducing the magnitude of the focus errorsignal as well as the value of $S_p$. For detection system 16 in Figure 2, this means that the length of the diagonal of the square radiation-sensitive surface is preferably in the range between 1.5 and 3 times the diameter of shape 19. A spot diameter of 30 μm results in a diagonal range from 45 to 90 μm with a preferred value of 60 μm. The diameter of the radiation spot is the diameter of the so-called circle of least confusion when using the astigmatic focusing method. For other radiation spots the diameter is equal to the diameter of the circle enclosing 90% of the energy of the spot.

The effect of the small detection system 16 on the S-curves is indicated by the broken lines in Figure 4. The total width of each S-curve is reduced to less than twice the length of $S_p$, and thereby also the crosstalk of S-curve 39 on S-curve 35. The minimum distance of information layers can now be reduced to 1.5 n $S_p$. The maximum distance is preferably 3 n $S_p$. A preferred distance within the range is 2 n $S_p$. When the peak-to-peak distance is equal to 12 μm and the refractive index of the spacer layers is 1.56, the thickness of the spacer layer is preferably between 28 μm and 56 μm, with a preferred value of 37 μm. A focus servosystem specially designed for scanning multi-layer record carriers has a peak-to-peak distance of 8 μm. This is achieved by increasing the numerical aperture of the radiation beam incident on detection system 16 and introducing an appropriate mount of astigmatism in this beam. Said 8 μm peak-to-peak distance and a refractive index of 1.56 give a preferred thickness range from 19 μm to 37 μm.

A small focus offset due to crosstalk at the lower end of the ranges may be compensated by an electronic offset. The value of the electronic offset preferably depends on the thickness of the spacer layers and the reflectivity of the information layers.

Although the above discussion is based on a focus servosystem according to the astigmatic method, the invention is not limited to this method. It can be used in each system comprising a focus servosystem having an S-curve. Examples of such servosystems are disclosed in United States Patent no. 4,533,826 using the Foucault or knife-edge method and in Japanese Patent Application no. 60-217 535 using the beam-size method. For an elongate Foucault detector with a divided surface the largest dimension of the radiation-sensitive surface is defined as the overall width of said surface measured perpendicular to its dividing line.

The proximity of unscanned information layers close to the scanning spot also causes crosstalk in the radial errorsignal $S_r$, which arises in about the same way as the crosstalk in the focus errorsignal $S_f$. Radiation of the two tracking beams 24, 25 reflected from the currently scanned information layer give a reasonably small radiation spot on each of the detection systems 30 and 31. Radiation reflected from currently unscanned information layers gives a relatively large radiation spot on the detection systems. The size of detection systems 30 and 31 should therefore be reduced as far as possible. The length of the diagonal of the radiation-sensitive surface of each of the detection systems preferably ranges between 1 and 3 times the diameter of the radiation spot on the surface formed by a tracking beam optimally focused on an information layer. A radiation-sensitive surfaces split by a dividing line is regarded as a single surface for determining its length.

Radiation of the main beam 26 reflected off currently unscanned information layers forms a radiation spot centred on detection system 16. Depending on the thickness of the spacer layers which determines the size of the spot, radiation of the spot might fall on detection systems 30 and 31. Since the intensity of the main beam is generally substantially greater than the intensity of the tracking beams, the crosstalk of radiation from the main beam on the radial errorsignal may be considerable. The crosstalk is reduced according to the invention by choosing the power in the main beam to be smaller than six times the power in each of the tracking beams. The reduced power in the main beam is sufficient to write and erase information in most types of information layers.

The above two measures for reducing crosstalk between radial errorsignals are independent of the method used to generate the radial errorsignal. Examples of methods in which one or two of the above measures can be applied are the one-beam push-pull method as disclosed in United States Patent no. 4,057,833, the two-beam push-pull method as disclosed in European Patent Application no. 0 201 603 and the three-beam method as disclosed in United States Patent no. 3,376,842.

Spherical aberration incurred by main beam 26 in traversing material of record carrier 1 may be compensated by introducing spherical aberration of a different sign in the beam. Objective lens 14 may function as compensator by designing the lens such that it introduces the amount of spherical aberration in the beam required for a certain height of scanning spot 15 in the record carrier. Such an objective lens is known from the European Patent no. 0 146 178 (US 4 668 056). When the height of the scanning spot deviates from the height for which the spherical aberration is compensated, additional, uncompensated spherical aberration is introduced in the main beam. It gives rise to a reduced quality of scanning spot 15 which can be expressed by a decrease r of the Strehl intensity of the scanning spot. The value of the additional aberration is an odd function of the height deviation, resulting in scanning spots for positive and negative height deviations with different intensity distributions. In spite of these different intensity distributions, the quality of the information signal $S_i$ turns out to depend on the inverse square value of the abberation. An equal positive and negative height deviation thus give about the same reduction in quality of the information signal. Hence, there exists a range of thicknesses with only a small reduction of the quality of the information signal, which range is located symmetrically around the thickness for which the radiation beam is compensated. The extent of the range is determined by the minimum quality of the information signal as required by the system. The extent can also be expressed in terms of the maximally permissible decrease r of the Strehl intensity due to spherical aberration. In general the designer of a scanning device will have a tolerance budget for the decrease of the Strehl intensity due to all optical aberrations. Part of the budget will be allocated to a decrease caused by spherical aberration. This part determines the extent of said range.

According to the invention stack 2 of information layers is located within the range of thicknesses with a permissible reduction of the quality of the information signal. When the height of the outermost information layers of the stack is within the range of thicknesses, all information layers can be scanned with a well corrected scanning spot. In order to make optimum use of the range, such an amount of spherical aberration is introduced in the main beam that the scanning spot is substantially free from spherical aberration at approximately half the height of the stack. If the extent of the range, i.e. the maximum thickness of stack 2, is represented by 2d, then

$$2d = \frac{34\, n^3 \lambda \sqrt{r}}{(n^2-1)(NA)^4}$$

in which n is the refractive index of the spacer layers, $\lambda$

is the vacuum wavelength of the radiation beam and NA is the numerical aperture of objective lens 14. If the system has the following parameter values: $\lambda$ = 780 nm, n = 1.56, NA = 0.52 and r = 0.05, then 2d = 215 μm. Hence, the height of the stack of information layers of the system can be up to 215 μm. All information layers in the stack can then be scanned by the device with a sufficiently corrected scanning spot. If the device has a peak-to-peak distance of the S-curve of 12 μm with an associated optimum distance of the information layers of 37 μm, then the stack can contain five information layers.

Figure 5 shows a record carrier 40 comprising a transparent substrate 41. The substrate has on one side an entrance face 42 on which main beam 26 is incident and on the other side stack 2 comprising information layers 3, 4 and 5. The main beam is corrected for the spherical aberration introduced by a substrate having a nominal thickness and by half the thickness of stack 2. The additional spherical aberration due to thickness variations of the substrate reduces the maximum thickness of the stack. For the above set of parameter values, a peak-to-peak thickness tolerance of 100 μm of the substrate and a refractive index of 1.56 of the material of the substrate, the maximum thickness of the stack is given by 215 - 100 = 115 μm. This stack can contain three instead of five information layers. Another example of a system according to the invention with a record carrier as shown in Figure 5, which system is less tolerant for spherical aberration, has parameter values: $\lambda$ = 635 nm, n = 1.56, NA = 0.52, $S_p$ = 8 μm, r = 0.01 and a thickness tolerance of the substrate of 40 μm. The extent 2d of the range is then equal to 78 μm, and the maximum thickness of the stack of the record carrier is 78 - 40 = 38 μm. The optimum spacing 2 n $S_p$ of the information layers in the stack is equal to 25 μm. Therefore, the stack can contain two information layers. To further reduce the crosstalk due to the proximity of the layers, the spacing may be increased to 38 μm without affecting the maximum amount of information to be stored in the record carrier. The information layers of such a record carrier may be scanned by a device with a single, fixed compensation of the spherical aberration.

The refractive index of one or more spacer layers may be equal to one, i.e. the spacer is an air layer. As an example, spacer layer 6 in Figure 5 may have a refractive index of one. The record carrier 40 then comprises substrate 42 with information layer 3 being a, for instance, embossed surface of the substrate, and information layers 4 and 5 being two surfaces of a plate forming spacer layer 7. The plate and the substrate are kept at the required distance by means of spacer rings, which are not shown in the Figure. From the above formula it is clear that the air spacer does not contribute to the spherical aberration. Hence, the maximum thickness of stack 2 is then equal to the sum of the value of 2d as calculated from the formula using the refractive index of spacer layer 7 and the thickness of the spacer layer 6, reduced by the tolerance on the thickness of the substrate if necessary. Replacing a solid spacer layer by an air layer increases the possible number of information layers in the stack by one.

If the refractive index of the substrate is not equal to that of the spacer layers, the maximum additional spherical aberration of the substrate must be calculated first and the resulting reduction of the Strehl intensity must be subtracted from the maximum allowed reduction due to spherical aberration. The remaining reduction can then be used to calculate the maximum thickness of the stack.

The record carrier may be provided with several stacks of information layers. A device for scanning these layers should be provided with an adjustable spherical aberration compensator, which compensator requires only one setting of the compensation for each stack of layers.

The feature of scanning a stack of information layers with a single spherical aberration compensation may be advantageously combined with the feature of the minimum distance of the information layers. A decease of the minimum distance increases the number of information layers that fit in a stack of a certain thickness. Hence, such a decrease increases the information density of the record carrier and the number of information layers that can be scanned with a single compensation. It thereby provides a high-density record carrier and a relatively low cost scanning device. However, the application is not limited to the combination of the two features. As an example a system using said first feature and not said second feature scans the record carrier with two radiation beams. The scanning spot of a first beam is guided by an information layer, whereas the position of the scanning spot of a second beam is coupled to the first scanning spot and scans one or more other information layers. Hence, there is no crosstalk between servo errorsignals, and the distance of the information layers can be reduced accordingly. The height of the stack is limited by the spherical aberration incurred by the second beam according to said first feature. An example of a system using said second feature and not said first feature comprises a spherical aberration compensator providing a separate compensation for each information layer. The minimum distance between the information layers is determined by the crosstalk on errorsignals for focus and/or tracking servo systems, whereas there is no requirement on the maximum height of the stack of information layers.

**Claims**

1. An information storage system comprising an optical record carrier (1) having a stack (2) of information layers (3, 4, 5) alternating with spacer layers (6, 7),

and a device for scanning the information layers (10), which device is provided with a radiation source (11) and focusing means (14) for selectively focusing a radiation beam (12) from the radiation source on the separate information layers, and a focus servosystem (17, 21, 22),

**characterized in that** the thickness of each spacer layer is at least 1.5 times the refractive index of the spacer layer multiplied by the peak-to-peak distance of the S-curve of the focus servosystem.

2. An information storage system as claimed in Claim 1, **characterized in that** the thickness of the spacer layer (6, 7) is smaller than 4 times the refractive index of the spacer layer multiplied by the peak-to-peak distance of the S-curve of the focus servosystem.

3. An information storage system as claimed in Claim 1 or 2, **characterized in that** the focusing means (14) introduce such a fixed, stack-associated spherical aberration in the radiation beam that this aberration compensates the spherical aberration incurred by the radiation beam when it is focused at approximately half the height of the stack of information layers.

4. An information storage system as claimed in Claim 1, 2 or 3, **characterized in that** the thickness of the stack (2) is smaller than a value 2d, defined by the equation

$$2d = \frac{34\, n^3 \lambda\, \sqrt{r}}{(n^2\text{-}1)(NA)^4}$$

in which *n* is the refractive index of the spacer layers, λ is the vacuum wavelength of the radiation beam, *NA* is the numerical aperture of the focusing means and *r* is equal to 0.05.

5. An information storage system as claimed in Claim 4, in which the record carrier (1) comprises a transparent substrate (41) having an entrance face (42) for the radiation beam at one side and said stack (2) at the other side, **characterized in that** the thickness of the stack is smaller than *2d* minus the thickness tolerance of the substrate.

6. A device for scanning information layers of an optical record carrier (11), which device (10) is provided with a radiation source (11), focusing means (14) for selectively focusing a radiation beam (26) from the radiation source on the separate information layers, and a servosystem comprising a detection system (16) having a radiation-sensitive surface (16a, 16b, 16c, 16d) for receiving radiation from the radiation beam, **characterized in that** the radiation-sensitive surface has a largest dimension between 1,5 and 3 times the diameter of the radiation spot (19) formed on the radiation-sensitive surface by radiation from the record carrier when the radiation beam is optimally focused on the information layer to be scanned.

7. A device as claimed in Claim 6, provided with dividing means (23) located in the optical path between the radiation source and the focusing means for generating two servobeams (24, 25) and one main beam (26) from the radiation beam (12), **characterized in that** the power in the main beam is smaller than six times the power in each of the servobeams.

8. A device for use in the information storage system of Claim 1, for scanning information layers (3, 4, 5) separated by spacer layers (6, 7) in an optical record carrier (1), which device is provided with a radiation source (11) and focusing means (14) for selectively focusing a radiation beam (12) from the radiation source on the separate information layers, and a focus servosystem (21),

**characterized in that** the peak-to-peak distance of the S-curve of the focus servo system is smaller than or equal to the thickness of each of the spacer layers divided by the product of 1.5 times the refractive index of the spacer layer.

**Patentansprüche**

1. Informationsspeichersystem mit einem optischen Aufzeichnungsträger (1), der einen Stapel (2) aus mit Abstandsschichten (6, 7) abwechselnden Informationsschichten (3, 4, 5) aufweist,

und einer Einrichtung zum Abtasten der Informationsschichten (10), welche Einrichtung mit einer Strahlungsquelle (11) und Fokussierungsmitteln (14) versehen ist zum selektiven Fokussieren eines Strahlungsbündels (12) von der Strahlungsquelle auf die gesonderten Informationsschichten sowie mit einem Fokusservosystem (17, 21, 22),

**dadurch gekennzeichnet, dass** die Dicke jeder Abstandsschicht zumindest 1,5-mal die Brechzahl der Abstandsschicht multipliziert mit dem Spitze-Spitze-Abstand der S-Kurve des Fokusservosystems ist.

2. Informationsspeichersystem nach Anspruch 1, **dadurch gekennzeichnet, dass** die Dicke der Abstandsschicht (6, 7) kleiner ist als 4-mal die Brechzahl der Abstandsschicht multipliziert mit dem Spitze-Spitze-Abstand der S-Kurve des Fokusservosystems.

3. Informationsspeichersystem nach Anspruch 1 oder 2, **dadurch gekennzeichnet, dass** die Fokussierungsmittel eine solche feste, stapelzugehörige sphärische Aberration in das Strahlungsbündel einbringen, dass diese Aberration die sphärische Aberration kompensiert, die das Strahlungsbündel erleidet, wenn es bei ungefähr der halben Höhe des Stapels aus Informationsschichten fokussiert wird.

4. Informationsspeichersystem nach Anspruch 1, 2 oder 3, **dadurch gekennzeichnet, dass** die Dicke des Stapels (2) kleiner ist als ein Wert 2d, der definiert wird durch die Gleichung

$$2d = \frac{34\ n^3 \lambda\ \sqrt{r}}{(n^2-1)(NA)^4}$$

wobei n die Brechzahl der Abstandsschichten, λ die Vakuumwellenlänge des Strahlungsbündels, NA die numerische Apertur der Fokussierungsmittel und r gleich 0,05 ist.

5. Informationsspeichersystem nach Anspruch 4, wobei der Aufzeichnungsträger (1) ein transparentes Substrat (41) umfasst, das eine Eintrittsfläche (42) für das Strahlungsbündel an einer Seite und den genannten Stapel (2) an der anderen Seite aufweist, **dadurch gekennzeichnet, dass** die Dicke des Stapels kleiner als 2d minus der Dickentoleranz des Substrats ist.

6. Einrichtung zum Abtasten von Informationsschichten eines optischen Aufzeichnungsträgers(11), welche Einrichtung (10) mit einer Strahlungsquelle (11), Fokussierungsmitteln (14) zum selektiven Fokussieren eines Strahlungsbündels (26) von der Strahlungsquelle auf die gesonderten Informationsschichten sowie mit einem Servosystem mit einem Detektionssystem (16), das eine strahlungsempfindliche Fläche (16a, 16b, 16c, 16d) zum Empfangen von Strahlung aus dem Strahlungsbündel aufweist, versehen ist, **dadurch gekennzeichnet, dass** die strahlungsempfindliche Fläche eine größte Abmessung zwischen 1,5- und 3-mal dem Durchmesser des durch aus dem Aufzeichnungsträger stammende Strahlung auf der strahlungsempfindlichen Fläche gebildeten Strahlungsflecks (19) aufweist, wenn das Strahlungsbündel optimal auf die abzutastende Informationsschicht fokussiert ist.

7. Einrichtung nach Anspruch 6, mit im optischen Weg zwischen der Strahlungsquelle und den Fokussierungsmitteln liegenden Teilungmitteln (23) versehen, zum Erzeugen von zwei Servobündeln (24, 25) und einem Hauptbündel (26) aus dem Strahlungsbündel (12), **dadurch gekennzeichnet, dass** die Leistung in dem Hauptbündel kleiner ist als sechsmal die Leistung in jedem der Servobündel.

8. Einrichtung zur Verwendung in dem Informationsspeichersystem von Anspruch 1, zum Abtasten von durch Abstandsschichten (6, 7) getrennte Informationsschichten (3, 4, 5) in einem optischen Aufzeichnungsträger (1), welche Einrichtung mit einer Strahlungsquelle (11) und Fokussierungsmitteln (14) versehen ist zum selektiven Fokussieren eines Strahlungsbündels (12) von der Strahlungsquelle auf die gesonderten Informationsschichten sowie mit einem Fokusservosystem (21), **dadurch gekennzeichnet, dass** der Spitze-Spitze-Abstand der S-Kurve des Fokusservosystems kleiner oder gleich der Dicke jeder der Abstandsschichten dividiert durch das Produkt von 1,5-mal die Brechzahl der Abstandsschicht ist.

**Revendications**

1. Système de stockage d'information comprenant un support d'enregistrement optique (1) ayant un empilage (2) de couches d'information (3, 4, 5) alternant avec des couches d'espacement (6, 7), et un dispositif pour balayer les couches d'information (10), lequel dispositif est pourvu d'une source de rayonnement (11) et de moyens de focalisation (14) pour focaliser sélectivement un faisceau de rayonnement (12) en provenance de la source de rayonnement sur les couches d'information séparées et sur un système d'asservissement de focalisation (17, 21, 22), **caractérisé en ce que** l'épaisseur de chaque couche d'espacement est au moins égale à 1,5 fois l'indice de réfraction de la couche d'espacement étant multiplié par la distance de crête-à-crête de la courbe dite S du système d'asservissement de focalisation.

2. Système de stockage selon la revendication 1, **caractérisé en ce que** l'épaisseur de la couche d'espacement (6, 7) est inférieure à quatre fois l'indice de réfraction de la couche d'espacement étant multiplié par la distance de crête-à-crête de la courbe S du système d'asservissement de focalisation.

3. Système de stockage d'information selon la revendication 1 ou 2, **caractérisé en ce que** les moyens de focalisation (14) introduisent une telle aberration sphérique fixe, qui est associée à l'empilage, dans le faisceau de rayonnement de façon que cette aberration compense l'aberration sphérique qui est provoquée par le faisceau de rayonnement lorsqu'il est focalisé à approximativement la mi-hauteur de l'empilage de couches d'information.

4. Système de stockage d'information selon la revendication 1, 2 ou 3, **caractérise en ce que** l'épaisseur de l'empilage (2) est inférieure à une valeur 2d qui est définie par l'équation

$$2d = \frac{34n^3\lambda\sqrt{r}}{(n^2-1)(NA)^4}$$

dans laquelle n est l'indice de réfraction des couches d'espacement, $\lambda$ est la longueur d'onde à vide du faisceau de rayonnement, NA est l'ouverture numérique des moyens de focalisation et r est égale à 0,05.

5. Système de stockage d'information selon la revendication 4, dans lequel le support d'enregistrement (1) comprend un substrat transparent (41) ayant une face d'entrée (42) pour le faisceau de rayonnement à un côté et ledit empilage (2) à l'autre côté, **caractérisé en ce que** l'épaisseur de l'empilage est inférieure à 2d moins la tolérance d'épaisseur du substrat.

6. Dispositif pour balayer des couches d'information d'un support d'enregistrement optique (11), lequel dispositif (10) est pourvu d'une source de rayonnement (11), de moyens de focalisation (14) pour focaliser sélectivement un faisceau de rayonnement (26) en provenance de la source de rayonnement sur des couches d'information séparées et d'un système d'asservissement qui comprend un système de détection (16) ayant une surface sensible au rayonnement (16a, 16b, 16c, 16d) pour recevoir du rayonnement en provenance du faisceau de rayonnement, **caractérisé en ce que** la surface sensible au rayonnement présente une dimension la plus élevée entre 1,5 et trois fois le diamètre du spot de rayonnement (19) qui est formé sur la surface sensible au rayonnement par du rayonnement en provenance du support d'enregistrement lorsque le faisceau de rayonnement est focalisé optimalement sur la couche d'information à balayer.

7. Dispositif selon la revendication 6 étant pourvu de moyens diviseurs (23) qui se situent dans le trajet optique présent entre la source de rayonnement et les moyens de focalisation pour générer à partir du faisceau de rayonnement (12) deux faisceaux d'asservissement (24, 25) et un faisceau principal (26), **caractérisé en ce que** la puissance dans le faisceau principal est inférieure à six fois la puissance dans chacun des faisceaux d'asservissement.

8. Dispositif pour être utilisé dans le système de stockage selon la revendication 1, pour balayer des couches d'information (3, 4, 5) qui sont séparées par des couches d'espacement (6, 7) dans un support d'enregistrement optique (1), lequel dispositif est pourvu d'une source de rayonnement (11) et de moyens de focalisation (14) pour focaliser sélectivement un faisceau de rayonnement (12) en provenance de la source de rayonnement sur les couches d'information séparées, et un système d'asservissement de focalisation (21), **caractérisé en ce que** la distance de crête-à-crête de la courbe S du système d'asservissement de focalisation est inférieure ou égale à l'épaisseur de chacune des couches d'espacement étant divisée par le produit égal à 1,5 fois l'indice de réfraction de la couche d'espacement.

EP 0 729 629 B1

FIG.1

FIG.2

FIG.4

FIG.3

FIG.5